# EUROPEAN PATENT APPLICATION

(11) **EP 4 592 974 A1**
(43) Date of publication of application: **30.07.2025**
(21) Application number: 24154437.8
(22) Date of filing: 29.01.2024
(51) Int. Cl.: G06V 20/10, G06V 20/56

(54) **METHOD OF GENERATING A DIGITAL MAP, AND DIGITAL MAP GENERATION SYSTEM**

(71) Applicant: Siemens Mobility GmbH, 81739 München (DE)
(72) Inventor: Ahmadi, Gelavizh, 14197 Berlin (DE); Bahlmann, Claus, 10707 Berlin (DE); Husain, Asham, 99427 Weimar (DE); Sassenhagen, Peter, 12347 Berlin (DE); Stübinger, Lukas, 91093 Hessdorf (DE)
(74) Representative: Siemens Patent Attorneys

(57) **Abstract**

There is described a computer-implemented method to generate a digital map (150), the method comprising:
i) obtaining two-dimensional images (121);
ii) identifying (120) assets in said two-dimensional images (121) using an Al functionality (126) to obtain two-dimensional asset identification data (125);
iii) obtaining three-dimensional representation data (131) corresponding to the two-dimensional images (121);
iv) combining (130) the two-dimensional asset identification data (125) and the corresponding three-dimensional representation data (131) to obtain three-dimensional asset identification data (135); and
v) coupling (140) the three-dimensional asset identification data (135) with corresponding geographical positions (141).

## Description

### Field of invention

The present invention relates to a method of generating a digital map, in particular a digital railway map, based on a specific combination of two-dimensional images, three-dimensional representation data (e.g. point clouds), and (accurate or high precision) geographical positions. The invention further relates to a data processing device, configured to perform said method. Additionally, the present invention relates to a digital map generation system that comprises a mapping device and said data processing device. Thus, the present invention may relate to the technical field of generating a digital map, in particular in the context of the railway domain/sector.

### Art Background

In many technical fields, there can be observed a constant trend towards automation and higher capacity demands on existing infrastructure. For example, there are many approaches towards automatically driving vehicles such as railway vehicles. Due to a high demand for public transportation and freight transport, the future of rail operations can be expected to be mostly automatic or even autonomous to satisfy these needs of the society. Such an automatic/autonomous operation may be enabled by specific assistance and autonomous driving systems on the respective vehicle.

Yet, a basis for such automatically/autonomously driving vehicle systems would by a digital (rail) map which can support driverless driving in several aspects, for example:
i) precise ego localization of the vehicle,
ii) obstacle detection, and
iii) safety assurance.

In the field of the railway sector (including e.g. railway infrastructure, railway tracks, railway vehicles, etc.) , safety standards may be especially high, since the life of many passengers is at risk. Therefore, highly reliable and safety proven systems and maps may be essential.

A digital (rail) map can not only be used for the operation of the (railway) vehicles but also for the maintenance of the infrastructure which can be also represented by said digital (rail) map.

High precision in localization and the capability to store more information at the infrastructure assets may be key to perform better maintenance and to know the condition of the assets (by the integration of diagnostic and dynamic data to the static digital (rail) map). Thus, a higher availability and capacity of the infrastructure may be obtained, thereby serving the mobility need of the society.

In order to generate a highly precise digital (rail) map, it may be necessary to have the exact position of the assets (e.g. objects such as electricity pylons, cable boxes, etc. along a road or railway track). Such positions are generally obtained based on raw sensor data, e.g. measured by a mobile mapping system.

Conventionally, the generation of such a digital rail maps is performed by one of the following two track surveying approaches:
i) Track survey by manual measurement: here, track surveyors travel to the tracks and measure the occurrence and location of tracks and assets using measuring wheels, total stations, etc. Afterwards, in the back office, the data is aggregated in a manual manner in an analog or digital way.
ii) Digital track survey: this approach is based on mobile mapping systems and manual post-processing of the raw sensor data using typical surveying or software. Here, assets are localized in the (measured) 3D point cloud and annotated (manually) by human experts via the software. Afterwards, in the back office, the data is aggregated manually.

It can be seen that the concurrent generation of digital maps still requires a high manual workload. On the one hand, the measured raw sensor data alone are just obtained as (3D) point clouds. On the other hand, photographs taken do not contain higher-level, semantic information about the environment. The necessary manual work is hence tiring, time-consuming, and expensive. However, at the time being, an automatic digital map generation would not be accurate enough. In this conext, it may be kept in mind that the total length of all railway tracks worldwide is around 1.374.001 km. Thus, scalability of such an approach may be seen as an important aspect.

### Summary of the Invention

There may be a need to generate a digital map in an efficient (in particular automated) and reliable manner (in particular in accordance with safety standards). A method, a data processing device, a digital map generation system, and a use of the digital map are described.

According to an aspect of the invention, there is described a (computer-implemented) method (in particular at least partially, more in particular fully, automated) to generate a digital map (in particular a digital railway map), the method comprising:
i) providing/obtaining two-dimensional images (of an environment, in particular a railway (track) environment) (for example taking pictures by a camera);
ii) identifying (recognizing) assets (e.g. infrastructure-related objects such as a sign, a cable cabinet, a tower) in said two-dimensional images by using an (trained) AI functionality (Al module, Al algorithm) to obtain two-dimensional asset identification data (wherein the assets of the two-dimensional images are identified/labelled);
iii) providing/obtaining three-dimensional representation data (three-dimensional information, three-dimensional images) (e.g. a 3D point cloud) (of said environment), in particular corresponding (locally) to the two-dimensional images (for example by LiDAR measurements);
iv) combining (transferring, fusing) the two-dimensional asset identification data and the corresponding three-dimensional representation data to obtain three-dimensional asset identification data (wherein the assets of the three-dimensional representation data are identified/labelled) (e.g. by placing points of the 3D point cloud into identified segments of the two-dimensional images); and
v) coupling/combining the three-dimensional asset identification data (and/or the two-dimensional asset identification data) to (highly accurate/precise) geographical positions (e.g. determined by a GNSS system) (this step v) may be performed after step iv) and/or after step iii).

According to a further aspect of the invention, there is described a device for data processing which has at least one processor and which is configured to perform the method described above. Such a device may be a stand-alone device (e.g. an integrated circuit, a computer) or comprise two or more entities. These entities may be connected in a wired or wireless manner. At least part of the data processing device may operate remotely, e.g. via a network.

According to a further aspect of the invention, there is described a digital map generation system, comprising:
i) a mobile mapping device, in particular configured to drive along/on at least one of a railway track, a special maintenance vehicle, a regular operating vehicle/train), comprising a device for providing two-dimensional images (in particular a camera device) and/or a device for providing three-dimensional representation data (e.g. a LiDAR device); and
ii) a device for data processing as described above (said device may at least partially be implemented in the mobile mapping device or may operate remotely, e.g. in a back-office).

According to a further aspect of the invention, there is described a use of a digital map, generated according to the method described above, for an automatic/autonomous (railway) vehicle, in particular for a self-localization of said vehicle.

In the present context, the term "asset" may in particular refer to a physical structure that appears in the two-dimensional and three-dimensional representation data. In an example, such an asset may be considered relevant or at least of interest for the driving to be accomplished using the digital map. In an example, the asset may be an object along (in the environment of) the way to be driven, in particular an object along a railway track, for example a tower, a cable box, a traffic signal etc. In an example, an asset may be associated with an infrastructure, for example the infrastructure of a railway track/network or a highway network.

In the present context, the term "two-dimensional image" may in particular refer to a visual representation that has two dimensions (generally length and width) but lacks a third dimension (generally depth or thickness). This type of image may be planar and/or may be displayed or printed on surfaces (without losing information). Examples of two-dimensional images may comprise photographs, drawings, paintings, icons, digital graphics, etc.

In the present context, the term "three-dimensional representation data" may in particular refer to a visual representation that includes a depth/thickness in addition to length and width, giving it spatial information (and a volume). Three-dimensional representation data may be obtained for example by a scanning method such as radar, stereo camara system, or LiDAR. Three-dimensional representation data may provide a more immersive and detailed understanding of objects and environments as a two-dimensional image.

In the present context, the term "Al" (synonymously the term machine learning may be used) may refer to approaches to mimic cognitive functions of a human mind, in particular learning and problem solving. There have been developed a plurality of different mathematic algorithms and computational models to implement AI functionalities. These include for example neural networks (in particular deep learning), genetic algorithms, support vector machines, and kernel regression. The main purpose of these approaches may be seen in improving a present algorithm by training it using training data, so that a learning effect occurs and the problem solving ability of the algorithm improves over time. Accordingly, an AI algorithm may be applied to constantly improve the adaption of the phase/amplitude. Evolution of the AI algorithm may be accompanied by human interaction or may be completely automatic. An AI functionality may be implemented e.g. as an AI algorithm or an AI module.

According to an exemplary embodiment, the invention may be based on the idea that a digital map may be generated in an efficient (in particular automated) and reliable manner, when assets of the (railway) environment/infrastructure are identified in a first step in two-dimensional images by an AI functionality, and the identification data are then transferred to corresponding three-dimensional representation data and (highly accurate/precise) geographical position data.

The described approach automatically provides the two-dimensional and three-dimensional representation data(e.g. using a mobile mapping device, in particular a railway vehicle), and in particular couples them to geographical positions. The described algorithm categorizes the assets automatically using an AI module in the two-dimensional images and then generates three-dimensional locations based on the assets identified in the two-dimensional images.

It has been found by the inventors, that an especially reliable asset-identification may be done automatically (using the AI functionality) on the two-dimensional images only (and not on the three-dimensional representation data). The obtained highly reliable two-dimensional asset identification data can then be transferred (also automatically) to the three-dimensional representation data (e.g. point clouds) and coupled (also automatically) with geographical locations.

Illustratively speaking, the following three questions may be answered by the described approach in the following order:
i) what is it in 2D?
ii) what is it in 3D?
iii) where is it?
This workflow may be performed automatically (but still highly precise) to obtain the digital map in a cost- and time-efficient manner.

Besides the automation, the described approach may provide the advantages of being scalable and versatile, thereby being applicable in a very flexible manner to a plurality of different environments. Besides the self-localization, obstacle determination, and safety assurance, the provided digital map may also serve for maintaining and monitoring the infrastructure.

The described approach may be cost- and time-effective, which may be especially advantageous in generating digital maps for applications such as autonomous driving. The described approach may be implemented in existing mapping system in a straightforward and reliable manner.

### Exemplary Embodiments

In an embodiment, the digital map is a digital rail (way) map,
in particular related to assets along a railway track. Railway vehicles may be especially suitable for autonomous driving and corresponding digital maps to enable the autonomous driving may be highly appreciated. Besides the railway track itself, such a digital map may advantageously comprise further information about the assets in the environment of the railway tracks.

In an embodiment, providing the two-dimensional images (by a two-dimensional image providing device) comprises taking two-dimensional photographs, in particular by a (calibrated) camera device. In an embodiment, providing the three-dimensional representation data (by a three-dimensional representation data providing device) comprises performing measurements of the environment (e.g. using a suitable sensor device). Using established and reliable sensor technology, the two-dimensional and three-dimensional representation data may be obtained/provided efficiently.

To implement such a sensor device there may be applied (e.g. by the mobile mapping device) for example a camera, a distance sensor, a velocity sensor, a localization sensor, a radar, a GNSS/GPS, a differential GNSS, a SLAM (simultaneous-localization and mapping) functionality, a GPR (ground penetrating radar), two (or more) camera (stereo) system, a LiDAR.

In an embodiment, performing the (3D) measurements comprises using a LiDAR device, in particular a 3D-LiDAR. This may provide the advantage that well-established and reliable technology can be directly applied. The term "LiDAR" may in particular describe a method for measuring distances by illuminating the target with laser light (not radio pulses as with radar) and measuring the reflection of the laser light with a sensor. Differences in laser return times and wavelengths can then be used to provide 3-D representations of the target (3D point cloud).

In an embodiment, coupling with geographical positions comprises using a GNSS system, in particular an RTK (real time kinematic) GNSS system. Providing the two-dimensional and three-dimensional representation data may be accompanied by providing corresponding geographical positions (geolocations, coordinates). The geographical position may be directly recorded for example, when taking/measuring an image. In an example, a calibrated sensor/camera may be applied for this purpose. In another example, GNSS may be used to determine a specific geographical position, when obtaining the image. While the term "GPS" may refer to a system of the USA, the term "GNSS" may also refer to systems in Europe (Galileo), China (Baidou), Russia (Glonass) etc.

In an embodiment, the method further comprises: combining a plurality of (two-dimensional and/or three-dimensional) asset identification data relating to the same asset. Such a clustering (e.g. of identified segments) may significantly increase the reliability and accuracy of the digital map. For example, the probability of classifying an asset correctly and at the correct location may be further increased with each image involved in the clustering.

In an embodiment, combining comprises fusing the two-dimensional images (a two-dimensional image) with the corresponding three-dimensional representation data, in particular using an image processing method. Image processing methods to combine images (including 2D and 3D combination) as such are known, so that these can be directly applied. A fused image may contain the information content of both approaches.

In an embodiment, combining, in particular fusing, is supported by the geographical positions (of the images). The geolocations may be used to directly fit corresponding images (with comparable or equal coordinates) together.

In an embodiment, combining comprises using a further AI functionality/module. Combining a two-dimensional image and corresponding (e.g. based on the geolocation) three-dimensional representation data may be performed or supported by a further AI functionality. Said further AI functionality may be specifically trained for such a data combination. In particular, said AI functionality may be configured to fit 3D data (points) into identified 2D structures (or vice versa).

In an embodiment, combining comprises using digital models of assets, in particular computer-aided design (CAD)-based models. At least a part of the assets may be modeled (or existing models may be used), to have already a three-dimensional structure at hand. Fitting the three-dimensional representation data (of the asset) into said three-dimensional model may be especially efficient. CAD data (for example from the construction of the assets) may be very useful here.

In an embodiment, the further AI functionality is trained at least partially based on digital models of the assets. An especially efficient and reliable training method may comprise/involve the digital models of the assets. In this manner, the combination may be more precise.

In an embodiment, identification comprises segmentation (of the two-dimensional images). In the present context, the term "segmentation" may refer to the spatial identification of an asset. In other words, the location/dimension/extension of the asset is defined for (each) image. Such a segmentation may be implemented for example as a bounding box or a segmentation mask. The segmentation may be seen as a particularly useful kind of two-dimensional asset identification data (to be transferred to the three-dimensional space).

In an embodiment, providing the three-dimensional representation data comprises generating a three-dimensional data (point) cloud. Depending on the measurement method used to obtain the three-dimensional images/data, a specific distribution of data in space (for example said point cloud) may be recorded.

In an embodiment, combining/fusing comprises transferring the segments (for example the above identified bounding box or segmentation mask) to the corresponding part of the three-dimensional point cloud. In other words, a part of the point cloud may be fitted into a specific segment, thereby defining this part of the point cloud as a specific asset. In an embodiment, combining comprises fitting the corresponding points of the three-dimensional point cloud in the segments (or vice versa).

In an exemplary embodiment, based on camera images and AI based identification, assets are detected and segmented in the two-dimensional image. The accuracy may be further improved by re-identifying the assets in consecutive frames and fusing them over frames (i.e. temporally). The result can be either a sequence of bounding boxes (one or many) around the object or a segmentation mask, both in image coordinates. The points from the point cloud may be projected onto the image plane by employing for example camera calibration parameters and/or GNSS data. Subsequently, the points that fall within the defined bounding box or segmentation mask on the image plane are selected, and a singular localization point is deduced from them which has an accuracy of for example 10 meters. A further fine-tuning is described below of this approach.

In an embodiment, the method is partially or fully automated. This may provide the advantage of a cost- and time-efficient approach. Preferably, the interaction by human operators may be reduced as much as possible.

In an embodiment, the method further comprises: manually validating the two-dimensional object identification data provided by the AI functionality. Notwithstanding the feature above, the accuracy may be improved by (at least partially) evaluating/validating manually the AI output. Such a manual interaction may also be used as an additional training (improvement) of the AI module.

In an embodiment, the method further comprises: evaluating and/or validating the digital map, in particular manually. In the same manner, the accuracy of the digital map itself may be improved by manual validation and/or plausibility check.

In an embodiment, the method further comprises: defining a central line, in particular a railway (track), in the digital map. The final digital map may include a line along which the (autonomous) driving will take place. In a preferred embodiment, driving will be along a railway track, so that the way is clearly defined. Integrating such a central line into the digital map may render the application of the map more efficient.

According to an exemplary embodiment, using a sensor calibration, areas in the 3D point cloud (three-dimensional representation data) can be identified that correspond to the image coordinates of bounding boxes or segmentation masks (in the two-dimensional images). This area defines the search space for a more fine-granular search in 3D for the asset category under consideration. In the following, three approaches are described to register the relevant points to the asset category (transfer of asset identification of 2D to 3D point cloud):

In a first example, (further) Al-based methods (e.g. PointNet, PointPillars, etc.) are trained on 3D Lidar annotated asset examples. This includes (expensive) labelling in 3D point clouds. Use cases may be typically examples, where CAD models of assets are not available.

In a second example, 3D point clouds are matched in a model-based way to available CAD data of assets. Here, no annotation or training is needed. Use cases may be typically examples, where CAD models of assets are available, e.g. from the engineering/construction (especially for safety assessments).

In a third example, a combination of the first example and the second example is applied. Here, LiDAR scans synthesized and sampled from the CAD model are turned into training sets to train the (further) AI module. Here, there may also be no need for manual annotation due to the availability of the CAD model.

In an exemplary embodiment, there is described a combination of these fine localization approaches, to gain the most accurate representation of the object as well as the highest reliability and thus safety assessment. Validation of the data may be enabled by the combination of the three above-described approaches.

In an embodiment, providing the two-dimensional images and/or the three-dimensional representation data comprises: using a mobile mapping device, in particular configured to drive along a railway track. Such a device may obtain (collect) the necessary raw data for generating the digital map in an automatic (or even autonomous) manner, by driving along the railway tracks.

In an exemplary embodiment, a two-step approach is used to automatically identify assets of the railway infrastructure in a reliable and efficient way:
1) Detection and classification followed by a course localization: identification of relevant area in the point cloud: result is a section of some 10 meters region).
2) Fine localization: identification of assets in the selected point cloud area: some 0.1 meter or 0.01 meter sections.

In a specific embodiment, a sensor system comprising a calibrated camera, a LiDAR, and RTK-GNSS sensor(s) is used to implement the asset/object recognition and localization. It is described in an example, an implementation of combining AI based detection and segmentation and 3D Lidar based localization for a comprehensive and automated rail asset localization system.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows an overview of a method of generating a digital map, in accordance with an exemplary embodiment of the present invention.
Figure 2 shows identification of assets in two-dimensional images, in accordance with an exemplary embodiment of the present invention.
Figure 3 shows transferring two-dimensional asset identification data to three-dimensional representation data, in accordance with an exemplary embodiment of the present invention.
Figure 4 shows clustering object identification data relating to the same object, in accordance with an exemplary embodiment of the present invention.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously de-scribed embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

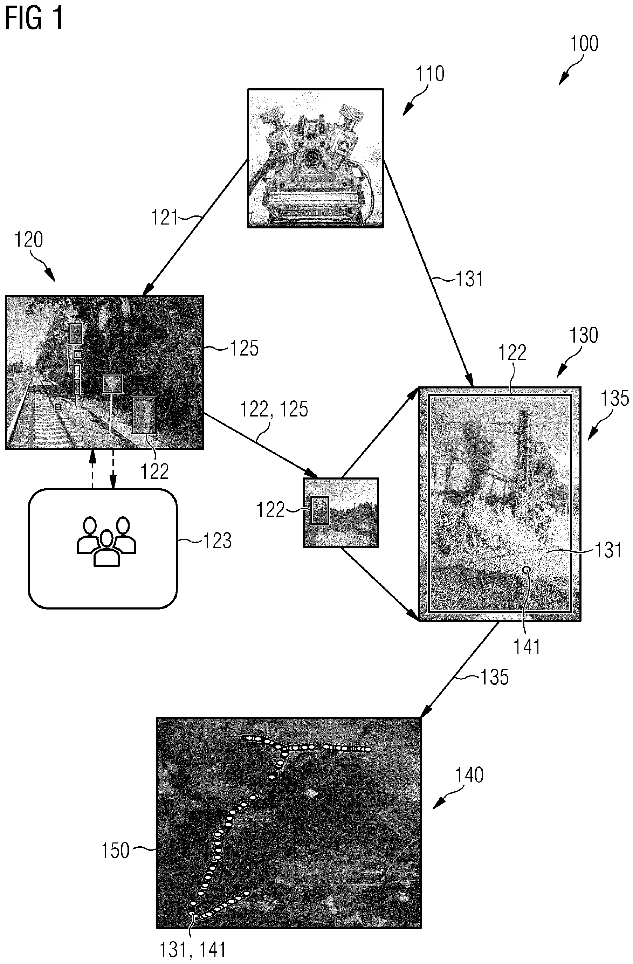

**Figure 1** shows an overview of a method 100 of generating a digital map, in accordance with an exemplary embodiment of the present invention. In a first step, obtaining two-dimensional images and three-dimensional representation data(corresponding to the two-dimensional images) are provided by a mobile mapping device 110. In the present example, said mobile mapping device 110 is a railway vehicle that drives along the railway tracks and measures data of the railway environment, for which the digital map should be generated. The mobile mapping device 110 comprises a plurality of sensors, including e.g. a calibrated camera to take photos (two-dimensional images) and a 3D-LiDAR to measure a point cloud of the environment. Further, the mobile mapping device 110 can be coupled with a GNSS system to provide highly accurate/precise geographical positions for the two- and three- dimensional representation data(and the assets in these images).

In a second step of identification 120, assets in said two-dimensional images 121 are recognized by using an AI module 126 to obtain two-dimensional asset identification data 125 (illustrated in the Figure by segmented and labelled objects). In particular, boxes are drawn around identified objects (segments 122). Optionally, the Al-based identification may be monitored/corrected manually 123.

In a third step of combination 130, the two-dimensional asset identification data 125 (including the segments 122) are transferred to the corresponding three-dimensional representation data 131 to obtain three-dimensional asset identification data 135. This is illustrated in the Figure by the combination (overlay/alignment) of the 3D point cloud 131 and the photo 121 with the identified segment 122 (here an electricity pylon). The drawn circle schematically illustrates the geographical position 141 associated with this location.

In a fourth step, the three-dimensional asset identification data 135 are coupled 140 to the geographical positions 141, thereby finalizing the digital map 150, here a railway track map including the infrastructure assets such as the electricity pylon.

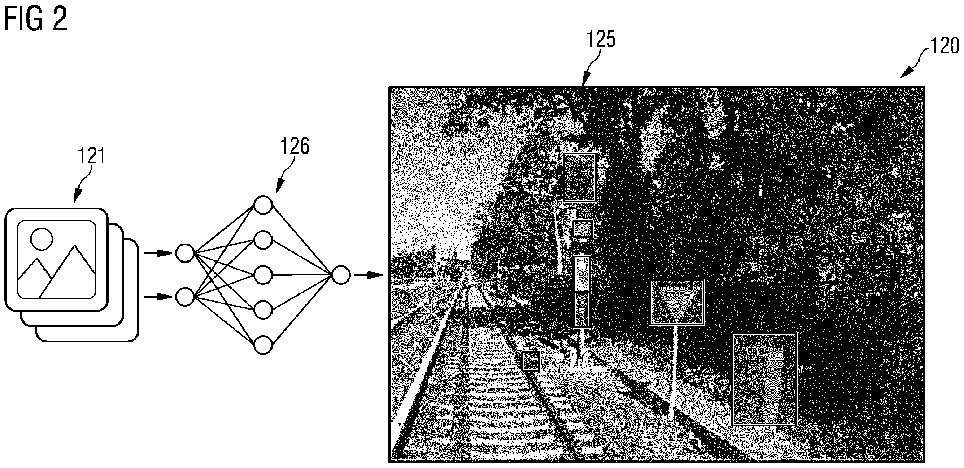

**Figure 2** shows in more detail the identification of the assets in the two-dimensional images 121, in accordance with an exemplary embodiment of the present invention. A plurality of said two-dimensional images 121 are provided as input to an AI functionality/module/algorithm 126, here a neural network. The AI module 126 has been trained for asset/object recognition in two-dimensional images (for example based on a plurality of photos, in particular supported by human decisions). The output of the AI module 126 are two-dimensional asset identification data 125. In this example of the two-dimensional asset identification data 125, each recognized asset along the railway track is labelled and marked by a bounding box (segmentation). In this example, the assets comprise a velocity sign, a cable box, and a traffic signal.

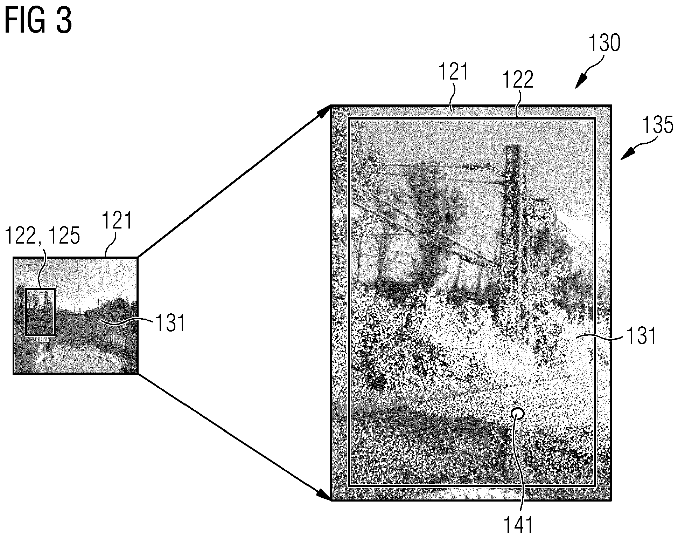

**Figure 3** shows in more detail transferring the two-dimensional asset identification data 125 to three-dimensional representation data (i.e. combining/fusing (130) 2D- and 3D-data), in accordance with an exemplary embodiment of the present invention. The small image on the left side shows an overlay of the photo 121 from the mobile mapping device (said device is even partially seen in the photo) and the 3D point cloud 131 (three-dimensional image). The two-dimensional asset identification data 125 are present here as the labelled segment 122 that identify the electricity pylon. The image on the right side is focused on said segment 122. The points of the 3D point cloud 131, which correspond to said electricity pylon, are identified based on the two-dimensional asset identification data 125. Furthermore, it is indicated by circle 141 that said segment 122 of the three-dimensional representation data is coupled with a geographical position (e.g. GNSS coordinates).

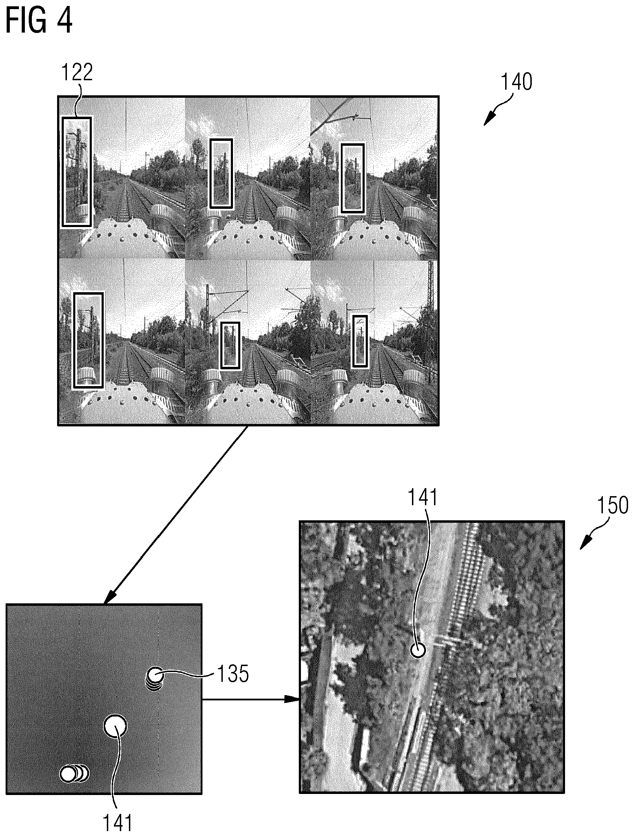

**Figure 4** shows clustering asset identification data relating to the same asset and coupling (140) the identification data to geographical positions, in accordance with an exemplary embodiment of the present invention. On top, there are shown six two-dimensional images 121, each showing the electricity pylon of Figure 3. It can be seen that these photos were taken, while the mobile mapping device 110 has been driving along the railway track. The asset has been identified by the Al module 126 in each two-dimensional image 121 and segmented 122 accordingly. The segments 122 are transferred to the three-dimensional data, so that a plurality of three-dimensional asset identification data 135 (each referring to the electricity pylon) can be coupled with a specific geographical position (here indicated by 141). In a satellite image on the right side, it can now be indicated that at this position 141, the identified electricity pylon is located. The labelled satellite image may then form part of the digital map 150. Further, a 3D representation of the asset can be implemented in the digital map 150.

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

## Claims

1. A computer-implemented method (100) to generate a digital map (150), the method comprising:
providing two-dimensional images (121);
identifying (120) assets in said two-dimensional images (121) by using an artificial intelligence, Al, functionality (126) to obtain two-dimensional asset identification data (125);
providing three-dimensional representation data (131);
combining (130) the two-dimensional asset identification data (125) and the corresponding three-dimensional representation data (131) to obtain three-dimensional asset identification data (135); and
coupling (140) the three-dimensional asset identification data (135) to geographical positions (141).

2. The method according to claim 1,
wherein the digital map (150) is a digital railway map,
in particular related to assets in the environment of a railway track.

3. The method according to claim 1 or 2,
wherein providing the two-dimensional images (121) comprises taking two-dimensional photographs, in particular by a camera device; and/or
wherein providing the three-dimensional representation data (131) comprises performing sensor measurements of the environment.

4. The method according to claim 3,
wherein performing the measurements comprises using a LiDAR, in particular a 3D-LiDAR.

5. The method according to one of the preceding claims,
wherein coupling (140) with geographical positions (141) comprises using a global navigation satellite system, GNSS, in particular a real-time kinematic, RTK, GNSS system.

6. The method according to one of the preceding claims, further comprising:
combining a plurality of asset identification data (125, 135) relating to the same asset.

7. The method according to one of the preceding claims,
wherein combining (130) comprises fusing the two-dimensional images (121) with the corresponding three-dimensional representation data (131), in particular using an image processing method.

8. The method according to one of the preceding claims,
wherein combining (130), in particular fusing, is supported by the coupled geographical positions (141).

9. The method according to one of the preceding claims, wherein combining (130) comprises at least one of the following features:
wherein combining comprises using a further AI functionality;
wherein combining comprises using digital models of the assets, in particular computer-aided design, CAD, based models;
wherein the further AI functionality is trained at least partially based on digital models of the assets.

10. The method according to one of the preceding claims, comprising at least one of the following features:
wherein identification (120) comprises segmentation (122) of the two-dimensional images (121);
wherein providing the three-dimensional representation data comprises generating a three-dimensional data cloud, in particular point cloud (131);
wherein combining comprises combining the segments (122) with the corresponding part of the three-dimensional data cloud (131);
wherein combining comprises fitting points of the three-dimensional point cloud (131) in the corresponding segments (122).

11. The method according to one of the preceding claims, further comprising at least one of the following features:
wherein the method is partially or fully automated;
wherein the method further comprises: manually validating (123) the two-dimensional object identification data (125) provided by the AI functionality (126);
wherein the method further comprises: evaluating and/or validating the digital map (150), in particular manually;
wherein the method further comprises: defining a central line, in particular a railway, in the digital map (150).

12. The method according to one of the preceding claims,
wherein providing the two-dimensional images (121) and/or the three-dimensional representation data (131) comprises:
using a mobile mapping device (110), in particular configured to drive along a railway track.

13. A device for data processing which has at least one processor and which is configured to perform the method according to any of claims 1 to 12.

14. A digital map generation system, comprising:
a mobile mapping device (110), in particular configured to drive along a railway track, comprising a two-dimensional image providing device and/or a three-dimensional representation data providing device; and
a device for data processing according to claim 13.

15. Using a digital map (150), generated according to the method of one of claims 1 to 12, for an automatic, in particular autonomous, vehicle, in particular for self-localization of said vehicle.
